Europäisches Patentamt

(19) European Patent Office

Office européen des brevets

(11) Publication number: **0 079 201**
**A2**

# (12) EUROPEAN PATENT APPLICATION

(21) Application number: **82305857.3**

(22) Date of filing: **04.11.82**

(51) Int. Cl.³: **G 11 B 15/10**

(30) Priority: **06.11.81 JP 178164/81**
**10.03.82 JP 37744/82**
**17.05.82 JP 82673/82**

(43) Date of publication of application:
**18.05.83 Bulletin 83/20**

(84) Designated Contracting States:
**DE FR GB NL**

(71) Applicant: **TOKYO SHIBAURA DENKI KABUSHIKI KAISHA**
**72, Horikawa-cho Saiwai-ku**
**Kawasaki-shi Kanagawa-ken 210(JP)**

(72) Inventor: **Tomita, Seiji c/o Patent Division**
**Tokyo Shibaura Denki K.K. 72, Horikawa-cho**
**Saiwai-ku Kawasaki-shi Kanagawa-ken 210(JP)**

(74) Representative: **Newstead, Michael John et al,**
**Haseltine Lake & Co. 28 Southampton Buildings**
**Chancery Lane**
**London, WC2A 1AT(GB)**

(54) Tape players.

(57) A tape player is disclosed for controlling movement of tape disposed on at least one reel of a tape cartridge, the reel defining a hole therethrough. The tape player is provided with a moving member (38) adapted for co-operation with the hole for rotating the reel, the moving member being rotatable about an axis and slidable along the axis, means (35, 42) for rotating the moving member, and means (40) for coupling the rotating means and the moving member when the moving member is slid in one direction. The tape player is operated to control movement of the tape, by means of the moving member passing through the hole.

FIG. 9

EP 0 079 201 A2

-1-

TAPE PLAYERS

The present invention relates to tape players.

Tape players have recently become popular which are of small size and lightweight, so as to be portable, in particular, which are of a two-way stereo type exclusively for playback use using headphones. Thus, the user can enjoy the playback of the tape while wearing the headphones and, for example, walking around. Such portable tape players of the type exclusively intended for use with headphones have already been reduced in size as far as possible. At present, they have about the same size as the cartridge case which holds the tape cartridge.

By the way, when the tape player is miniaturised to about the same size as the cartridge case, what is particularly required is to simplify its construction and to improve its operability and convenience in use, by improving a mechanism for driving tape and an arrangement of the various operating elements for putting the tape player in the various operating conditions such as playback, fast forward, rewind, and the stop condition. More specifically, the operating elements of previous small tape players were also small in size, in proportion to the tape player itself, and were concentrated in one place due to the relationship with the tape player mechanism. This of course made them difficult to operate and increased the risk of erroneous operation. Further, the tape drive mechanisms were complicated. Thus, it has been required that the operating elements should have such a configuration as to be large enough to be easily operated by the user and should have a comfortable separation from each other so that neighbouring elements are not unintentionally operated, thereby providing a tape player that is not only conveniently portable but which also has excellent operability and wherein there is no risk of erroneous operation.

Apart from simple playing back a tape, some such small tape players can receive radio transmissions. This is achieved by use of a tuner unit (hereinafter referred to as a "tuner pack"), which is formed by accommodating a tuner circuit portion, which carries out the reception, tuning, detection and amplification of the radio waves, in a casing of approximately the same shape as the tape cartridge, and fitting this tuner pack in the tape player, in place of a tape cartridge. A development along the lines of the requirements already mentioned is also urgently required for such small tape players capable of using a tuner pack.

It is, therefore, an object of the present invention to provide a tape player which is of simple construction. Another object of the present invention is to provide a tape player which is improved as regards its operative ability.

A further object of the present invention is to provide a tape player of which construction is highly integrated without useless parts.

A still further object of the invention is to provide a tape player of which the size is effectively made small.

According to one aspect of the present invention, there is provided apparatus for controlling movement of tape disposed on at least one reel, the reel defining a hole therethrough, the apparatus comprising:

a moving member adapted for co-operation with the said hole for rotating the said reel, the member being rotatable about an axis and slidable along this axis; means for rotating the said moving member; and means for coupling the said rotating means and the said moving member when the moving member is slid in one direction.

According to another aspect of the present invention, there is provided apparatus for controlling movement of a tape disposed on at least one reel, the reel defining a hole therethrough, the apparatus comprising: a moving member adapted for co-operation with the said hole for rotating the said reel, the member being both rotatable about an axis and slidable along this axis; means for rapidly rotating the said moving member; means for slowly rotating the said moving member; first means for coupling the said moving member and the said rapid rotating means when the said moving member is slid in a first direction; and second means for coupling the said moving member and the said slow rotating means when the said moving member is slid in a second direction.

According to another aspect of the present invention, there is provided apparatus for controlling movement of tape disposed on a pair of reels, each of the reels defining a hole therethrough, the apparatus comprising: a pair of moving members, adapted for co-operation with respective ones of the said holes for rotating the said reels, the said members being rotatable about first and second axis respectively, and slidable along the said first and second axes respectively; a pair of means for rotating the said pair of moving members respectively, in opposite directions, and a pair of coupling means, one of the said coupling means being for coupling one of the said pair of moving members and a corresponding one of the said pair of rotating means when one of the said moving members is slid in one direction, and the other of the said coupling means being for coupling the other of the said pair of moving members and the other of the said pair of rotating means when another of the said moving members is slid in one direction.

According to another aspect of the present invention, there is provided apparatus for controlling movement of tape disposed on a pair of reels, each of the reels defining a hole therethrough, the apparatus comprising: a pair of moving members, adapted for co-operation with respective ones of the said holes, for rotating the said reels, the said members being rotatable about first and second axes respectively, and slidable along the said first and second axes respectively; a pair of means for rapidly rotating the said pair of moving members respectively, in opposite directions; a pair of coupling means, one of the said coupling means being for coupling one of the said pair of moving members and a corresponding one of the said pair of rapid rotating means when one of the said moving members is slid in one direction, and the other of the said coupling means being for coupling the other of the said pair of moving members and the other of the said pair of rapid rotating means when another of the said moving members is slid in one direction; means for slowly rotating one of the said pair of moving members in the same direction as the rapid rotating means causes the said one of the said pair of moving members to rotate; and means for coupling the said one of the said pair of moving members and said slow rotating means when the said one of the said pair of moving members is slid in another direction opposite the said one direction.

According to another aspect of the present invention, there is provided apparatus for driving a cartridge tape, the cartridge tape including a housing defining a hole therethrough, at least one reel and tape wound on the reel, the apparatus comprising: means adapted for receiving the said cartridge tape; a moving member adapted for rotating the said reel, the moving member being mounted on the said receiving means; means for driving the said moving member; and means for controlling the operation of the said driving means, the controlling means including an actuating member extending through the said hole when said cartridge tape is located on the said receiving means.

According to another aspect of the present invention, there is provided apparatus for driving a cartridge tape, the cartridge tape including a housing defining a hole therethrough, at least one reel and tape wound on said reel, the apparatus comprising: means adapted for receiving the said cartridge tape; a moving member adapted for rotating the said reel, the moving member being mounted on the said receiving means; means for driving the said moving member; and means for interrupting the operation of the said driving means, the interrupting means including an actuating member extending through the said hole when the said cartridge tape is located on the said receiving means.

The present invention will now be described by way of example, with reference to the accompanying drawings, in which :-

Figures 1a and 1b are a front view and a side view showing a tape player;

Figure 2 is a perspective view showing the lid of the tape player;

Figure 3 is a perspective view showing how fast-forward and rewind operating elements are mounted on the lid;

Figure 4 is a perspective view showing the mechanism of the tape player, and the external appearance of a head unit and cassette holder;

Figure 5 is a perspective view showing the cassette holder of Figure 4 in its open condition;

Figure 6 is a view showing details of the construction of the tape player mechanism;

Figure 7 is a perspective view showing the relationship between a  playback operating element and the head unit;

Figure 8 is a perspective view showing the playback operating element in an operated condition;

Figures 9 to 12 are views given for explanation of the action of the tape player mechanism;

Figure 13 is a perspective view showing details of a stop operating element;

Figures 14a and 14b are views given for explanation of the action of a stop slider;

Figures 15 and 16 are a perspective view and a side view showing the shape and operation of a reel cap blade in one embodiment of a cassette tape player;

Figures 17a to 17c, Figure 18 and Figures 19a and 19b are side views showing other possible shapes of the reel cap blades;

Figure 20 is a perspective view showing the shape of gearwheels of the tape player mechanism;

Figure 21 is a side view showing the action of these gearwheels;

Figure 22 is a perspective view showing the relationship between the playback operating element and a locking lever;

Figures 23a and 23b are a front view and a back view of a tuner pack;

Figure 24 is a perspective view showing how the tuner pack is fitted into the cassette holder;

Figures 25 and 26 are front views showing the external appearance of tape players constituting different embodiments of the present invention;

Figure 27 is a front view showing a tape player which is modified from that of Figure 1a;

Figure 28 is a disassembled perspective view showing operating elements of Figure 27;

Figure 29 is an explanatory view of a pause operating mechanism;

Figure 30 is a side view in cross-section showing a modified example of a reel shaft portion; and

Figure 31 is a side view in cross-section showing further modifications of the reel shaft portion.

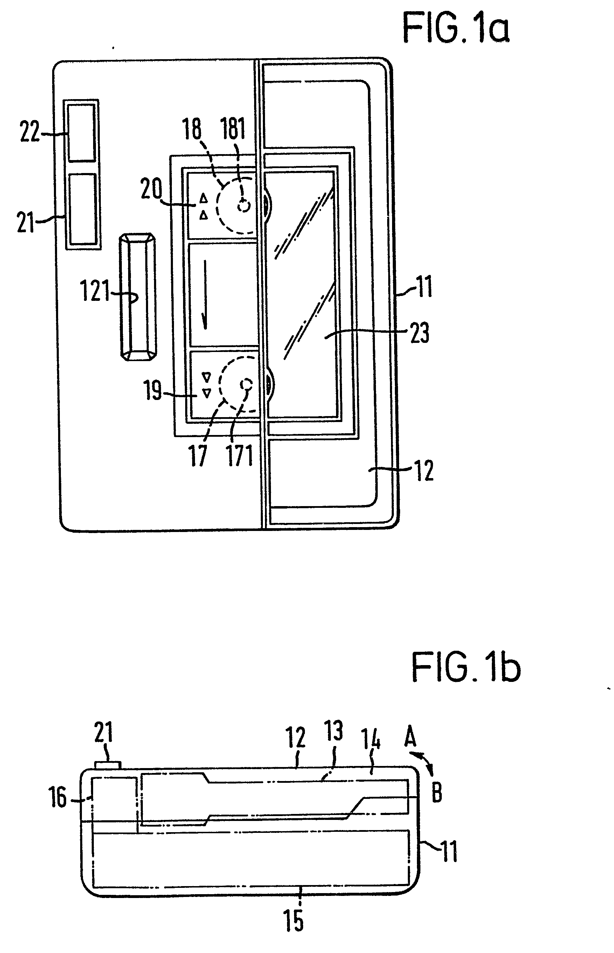

Throughout the drawings, like reference letters and numerals will be used to designate like or equivalent elements. Referring first to Figures 1a and 1b, a casing or cabinet 11 is formed approximately the same size as seen in its front view as a cartridge case, for example a cassette case, which holds a tape cassette. One planar surface of cabinet 11 forms a lid 12 for covering a tape cassette loaded in cabinet 11. Lid 12 is supported in such a way that it is able to be opened and closed by being rotated in the directions of arrows A and B in Figure 1b by a hand of the user. Lid 12 is slightly locked in both the open and closed positions, so that it does not rattle. Lid 12 is provided with a cassette holder which will be described in detail later. The cassette holder is linked with the opening and closing actions of lid 12, and can hold a tape cartridge, for example a tape cassette 13 indicated by the double-dotted chain lines in Figure 1b. Cabinet 11 contains a mechanism accommodating part 15 in which a tape cassette holding part 14 is arranged capable of accommodating tape cassette 13, when lid 12 is in its closed condition, and the tape player mechanism, circuitry, and battery holder, etc., which will be described later. A head unit 16 is also arranged inside cabinet 11, opposite the exposed face of tape cassette 13, and equipped with a playback head and pinch roller etc., to be described later. Both the head unit 16 and the cassette holder are linked for conjoint movement with the opening and the closing operation of lid 12.

As shown in Figure 1a, a pair of reel shafts 17 and 18, which are fitted into a pair of reel hubs (not shown) of tape cassette 13, are supported in tape cassette holding part 14. A fast forward operating element 19 and a rewind operating element 20 are arranged at positions corresponding to reel shafts 17 and 18 (which become take-up reels during fast forward and rewind operations) on lid 12, so as to include rotary shafts 171, 181 of reel shafts 17, 18. Fast forward and rewind operating elements 19, 20 are arranged so as to be capable of depressing rotary shafts 171, 181, to be described later, of reel shafts 17, 18 in their axial directions.

A playback operating element 21 and a stop operating element 22 are also arranged on lid 12, so as to be operable in such a way as to be depressed practically perpendicularly to the plane of lid 12. These elements 21 and 22 are arranged in positions corresponding to head unit 16, i.e. not facing the planar portion of tape cassette 13. A window 23 is defined in approximately the centre of lid 12. Window 23 is formed, for example, of transparent acrylic sheet and is arranged so that it at least partially overlies the well known transparent tape window formed in the planar portion of tape cassette 13. Specifically, the right end in Figure 1a of window 23 partly overlies reel shafts 17, 18, so that the running condition of the tape can be seen from outside through window 23. Concerning that the running condition of tape should be seen from outside, fast forward and rewind operating elements 19, 20 can be made of transparent material.

Lid 12 defines a tapered slot 121 expanding outwardly from tape cassette holding portion 14, in a position between fast forward and rewind operating elements 19, 20 and playback and stop operating elements 21, 22. Slot 121 is provided so that a tuning operation during a radio reception is able to be performed when using a tuner pack in place of tape cassette 13. Thus apart from being able to play back tapes, radio transmissions can also be received using the tuner pack. This is achieved by using a tuner pack which is formed by accommodating a tuner circuit unit for carrying out reception, tuning, detection and amplification of radio waves, in a casing of approximately the same shape as tape cassette 13, and fitting into tape cassette holding portion 14 in place of tape cassette 13. The tuning operation is performed by a tuning selector provided on the tuner pack so as to select the required transmitting station, whereupon the radio wave received is detected and amplified, then fed to a main amplifier circuit in the tape player through connection terminals, and reproduced by headphones. Lid 12 is then in a closed condition and the tuning selector projects to the outside through slot 121, so that the tuning operation can be carried out without opening lid 12. A volume controller, a tape type (normal, chrome, metal, etc.) a changeover switch and a headphone jack, etc. are arranged on the side of the cabinet 11, though not shown in Figures 1a and 1b.

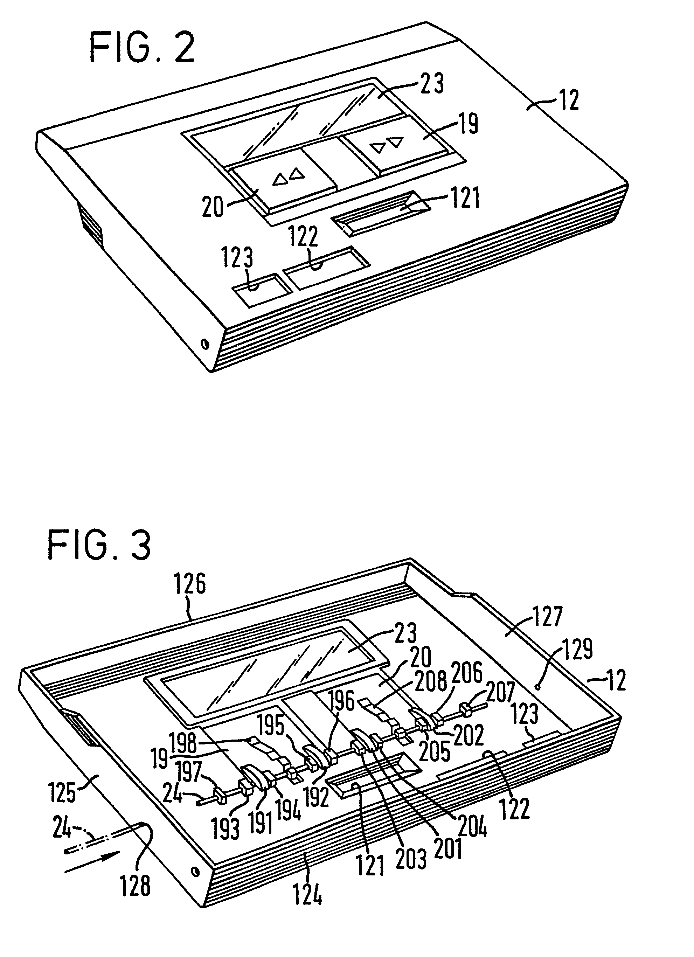

In Figure 2, lid 12 has been removed from cabinet 11. Through-holes 122 and 123 through which playback operating element 21 and stop operating element 22 are inserted are respectively formed in lid 12. As shown in Figure 3, four side portions 124 to 127 form side faces of cabinet 11. Fast forward and rewind operating elements 19, 20 are in approximately rectangular-shaped through-holes (not visible in Figure 3) formed in lid 12. Pairs of bearing parts 191, 192, and 201, 202 are respectively formed at the under-surface of fast forward and rewind operating elements 19, 20, the bearing parts of each pair being at respective ends of the respective under-surface. Further pairs of bearing parts 193, 194 and 195, 196 are formed at positions on the underside of lid 12 outside bearing parts 191 and 192 respectively of fast forward operating element 19. Further pairs of bearing parts 203, 204 and 205, 206 are also formed on the under-surface of lid 12 outside bearing parts 201, 202 respectively of rewind operating element 20. Thus, all bearing parts 191 to 196 and 201 to 206 are arranged on the same straight line. Through-holes 128, 129 are respectively formed in side portions 125, 127 of lid 12, at positions corresponding to the two ends of this line. As shown in Figure 3 by broken lines, a support shaft 24 is inserted from outside into through-hole 128 in side portion 125 of lid 12. Thus, fast forward and rewind operating elements 19, 20 are supported on lid 12 by support shaft 24 passing through all of bearing parts 191 to 196 and 201 to 206. Both ends of support shaft 24 are supported by bearing parts 197, 207 formed on the underside of lid 12. At approximately the centre of these underparts, fast forward and rewind operating elements 19, 20 are rotationally biased outwards from lid 12 about support shaft 24 by means of leaf springs 198, 208, respective ends of which are supported on support shaft 24, and the other ends of which press against the central portions of fast forward and rewind operating elements 19, 20. However, these portions are checked by abutment elements (not shown) which are formed on peripheries of the through-holes of lid 12 through which fast forward and rewind operating elements 19, 20 are inserted, and the edges of fast forward and rewind operating elements 19, 20. Thus, fast forward and rewind operating elements 19, 20 are held so as to be depressed downwards in Figure 2 against the biasing force of leaf springs 198, 208. When fast forward and rewind operating elements 19, 20 are operated by being depressed, the undersides of fast forward and rewind operating elements 19, 20 respectively depress rotary shafts 171, 181 of reel shafts 17, 18 in their axial directions.

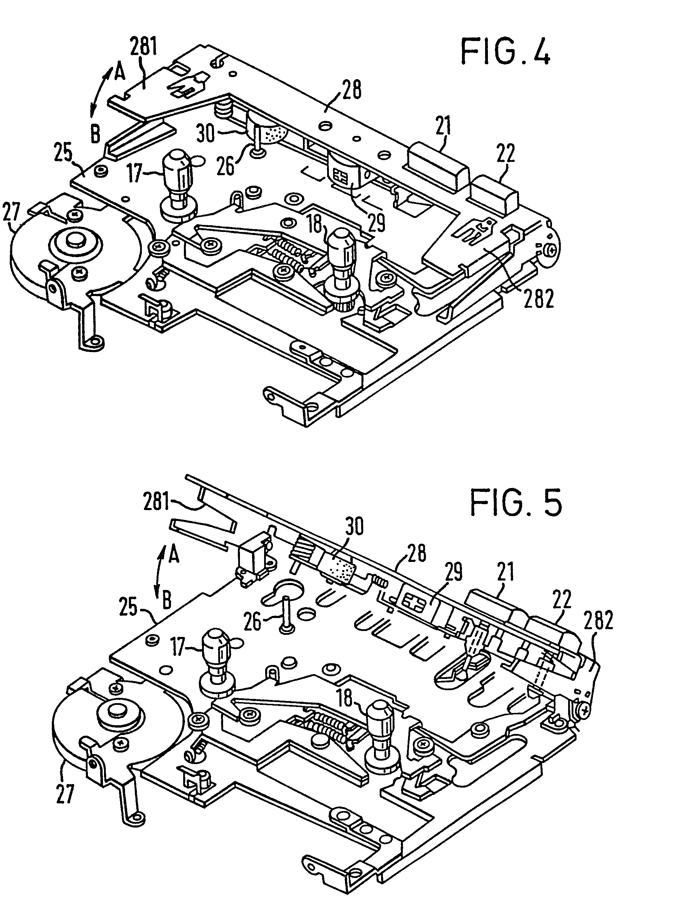

Figure 4 is an overall external view of the tape player mechanism, head unit 16, and cassette holder 28, etc. that are installed in the mechanism accommodating unit 15. A main chassis 25 of the tape player mechanism supports reel shafts 17, 18 so that reel shafts 17, 18 are free to rotate and free to slide in their axial directions. A capstan 26         is a rotary shaft of a flywheel as described later and a motor 27 which is  operably connected to reel shafts 17, 18  and capstan 26 are respectively supported on main chassis 25 together with reel shafts 17, 18. Cassette holder 28 is supported at one end of main chassis 25 so that cassette holder 28 is able to rotate in the directions of the arrows A and B in Figure 4. Holding elements 281, 282 are formed on cassette holder 28 at opposite ends thereof, so as to hold both end portions of tape cassette 13 (not shown). A playback head  29 and a pinch roller 30 that is able to be brought into contact with or moved away from capstan 26 are respectively supported in approximately the middle of cassette holder 28. Playback and stop operating elements 21, 22 are supported on cassette holder 28.

Lid 12 is fitted on to cassettte holder 28 so as to cover it. Playback and stop operating elements 21, 22 are then available for operation from the outside, after being inserted through through-holes 122, 123 (see Figure 2) formed in lid 12. When lid 12 is put into an open condition, cassette holder 28, moving conjointly with lid 12, is rotated in the direction of the arrow A in Figure 4, so as to assume the position shown in Figure 5. Playback head 29 and pinch roller 30 are then shifted together with cassette holder 28.

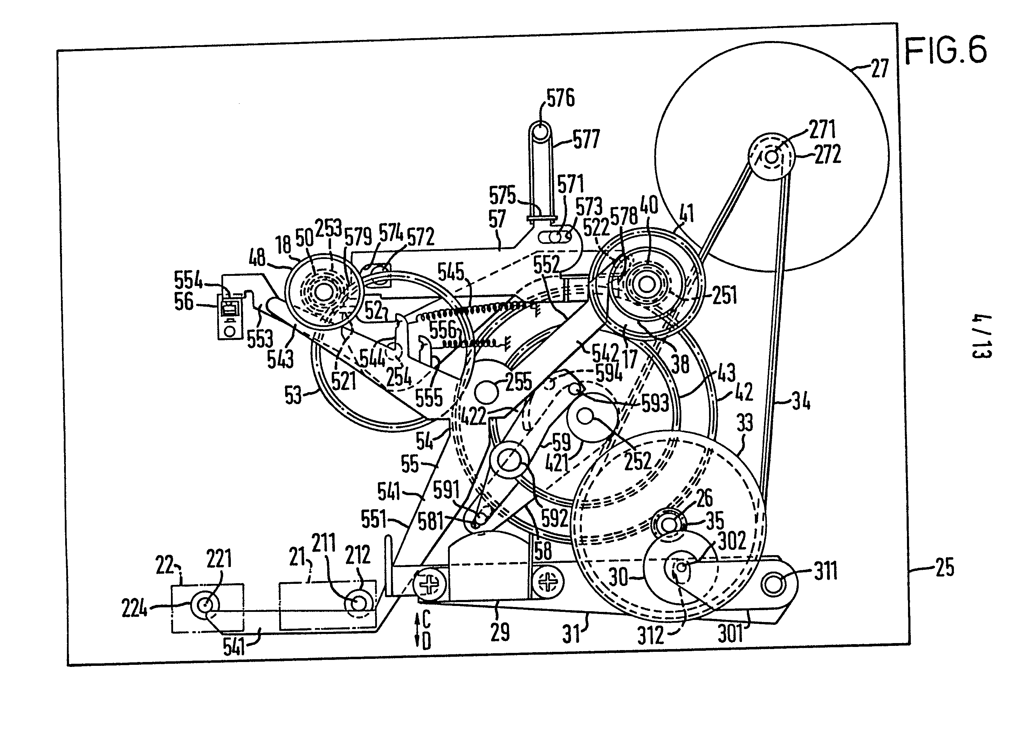

The detailed construction of the tape player mechanism and head unit 16 will now be explained. As seen from Figure 6, playback operating element 21 (indicated by double-dotted chain lines in the lower part of the figure) on main chassis 25 is supported on cassette holder 28 (not shown in Figure 6). A head chassis 31 is supported on cassette holder 28 on the right of playback operating element 21 in the figure, by means of a shaft 311. Shaft 311 supports head chassis 31 so that head chassis 31 is able to freely rotate in the directions of the arrows C and D in Figure 6. Playback head 29 is mounted at the left-hand end of head chassis 31 in the figure. One end of a pinch lever 301 is freely rotatably supported on shaft 311. Pinch roller 30 is also freely rotatably supported on the other end of pinch lever 301.

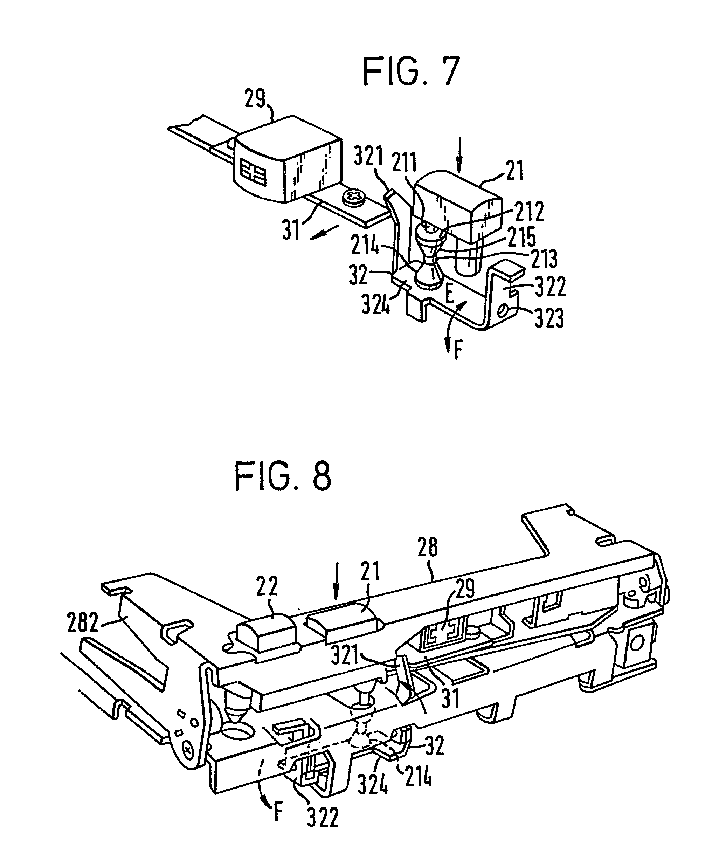

Head chassis 31 is biased for rotation in the direction of the arrow D in Figure 6 about shaft 311, by means of a torsion spring (not shown), one end of which abuts the side of head chassis 31, and the other end of which is abutted by cassette holder 28, the torsion spring being wound around shaft 311. Pinch lever 301 is biased for rotation in the direction of the arrow C in the figure about shaft 311 by means of a coil spring (not shown), which extends between pinch lever 301 and head chassis 31. A shaft 302 of pinch roller 30 is arranged to extend so that shaft 302 freely fits into a slot 312 formed in head chassis 31. The rotation of pinch lever 301 due to the coil spring in the direction of the arrow C therefore continues until shaft 302 abuts the upper end in the figure of slot 312. As shown in Figure 7, an abutment portion 321 extending from one end of a playback drive member 32 abuts the lower left hand end in Figure 6 of head chassis 31. Playback drive member 32 is supported so that playback drive member 32 is free to rotate in the directions of the arrows E and F in Figure 7, by means of a shaft (not shown), which is inserted into a through-hole 323 formed in a mounting portion 322 extending from the other end of playback drive member 32. The shaft for supporting playback drive member 32 projects from main chassis 25. Playback operating element 21 referred to earlier is supported on cassette holder 28 in a position above playback drive member 32, in such a way that playback operating element 21 is free to slide in the vertical direction in Figure 7, and prevented from coming out by being slid upwards in Figure 7.

Playback operating element 21 has an operating shaft 211 extending downwards from the lower portion of playback operating element 21. Operating shaft 211 is mounted on a first first drive portion 212 whose surface is shaped as an approximately conical surface. The head portion of first drive portion 212 is joined to the head portion of a second drive portion 214 whose surface is also shaped as an approximately conical surface, through a shaft 213. The base surface of second drive portion 214 faces a base surface 324 of playback drive member 32. Consequently, the rotation of head chassis 31 in the direction of the arrow D in Figure 6, due to the torsion spring for biasing head chassis 31, continues and the free end of head chassis 31 depresses abutment portion 321 of playback drive member 32. Playback drive member 32 is caused to rotate in the direction of arrow E in Figure 7 so that base portion 324 of playback drive member 32 depresses the base surface of second drive portion 214. Then, playback operating element 21 slides upwards in the figure, until further

rotation of playback drive member 32 is prevented by being arrested. Let us now assume that playback operating element 21 is operated by being depressed downwards, as shown in Figure 8. When this happens, the base surface of second drive portion 214 depresses base portion 324 of playback drive member 32. Playback drive member 32 is caused to rotate in the direction of arrow F in Figure 8. As a result, abutment portion 321 of playback drive member 32 depresses the free end of head chassis 31 against the biasing force of the torsion spring for biasing head chassis 31, and head chassis 31 is thereby rotated in the direction of arrow C in Figure 6. At this time, playback head 29 is brought into contact with a tape (not shown) of tape cassette 13. Pinch roller 30 is also pressed against capstan 26, with the tape interposed. Pinch roller 30 is set in a positional relationship such that pinch lever 301 is pressed back in the direction of arrow D in Figure 6 about shaft 311 against the biasing force of the coil spring which biases pinch lever 301 for rotation in the direction of arrow C in Figure 6, when pinch roller 30 presses against capstan 26.

Playback operating element 21 is locked in the depressed position shown in Figure 8. (The locking mechanism will be described later). Again as shown in Figure 6, motor 27 is mounted in the upper right-hand region in the figure of main chassis 25. A rotary shaft 271 of motor 27 has mounted on it a small-diameter pulley 272. On the other hand, a flywheel 33 is freely rotatably supported in the bottom right-hand region in the figure of main chassis 25. Flywheel 33 and pulley 272 are connected through a belt 34 so that turning force is able to be transmitted between them. The rotary shaft of flywheel 33 is capstan 26 as mentioned above. Capstan 26 is provided with a small-diameter gearwheel 35 in a position on flywheel 33 co-axially therewith, as shown in

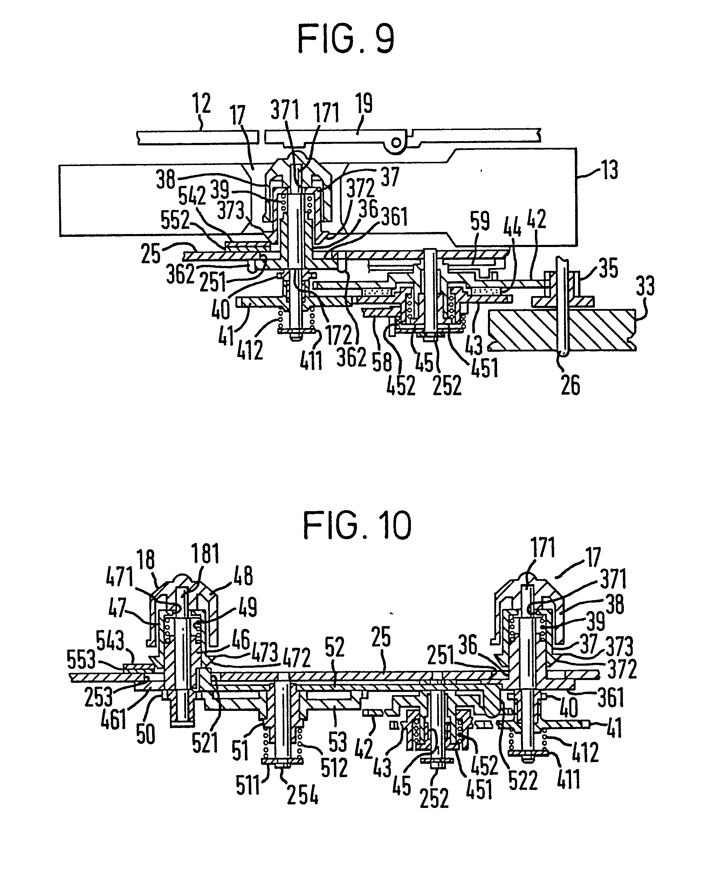

Figure 9. As shown in Figure 9, the pair of reel shafts 17, 18 are provided in approximately the centre of main chassis 25 (reel shaft 18 is not seen by being located behind reel shaft 17). Reel shaft 17, which takes up the tape during fast forward operation, is supported on main chassis 25. This is achieved by the provision of a through-hole 251 in the region where reel shaft 17 is to be mounted on main chassis 25. Into through-hole 251 is inserted a bearing member 36 which is approximately cylindrical in shape. Bearing member 36 is provided with a flange portion 361 of larger diameter than that of through-hole 251, under main chassis 25. Flange portion 361 of bearing member 36 is fitted to main chassis 25 around through-hole 251, by means of screws 362, 362. Rotary shaft 171 of reel shaft 17 is freely rotatably inserted into bearing member 36.

Rotary shaft 171 projects upwards in Figure 9 from bearing member 36. The projecting portion of rotary shaft 171 reaches a reel cap 38 in passing through a through-hole 371 formed in a base portion of a locking member 37, which is formed approximately in the shape of a cylinder having the base portion. Reel cap 38 rotates in unitary manner with rotary shaft 171, but locking member 37 is independent of the rotation of rotary shaft 171. A coil spring 39 is provided between the upper end in Figure 9 of bearing member 36 and the base portion of locking member 37, so that rotary shaft 171 is biased upwards in the Figure. Locking member 37 is provided with an abutment portion 373 having a tapered surface 372 which widens from the bottom in Figure 9 to the top. Abutment portion 373 is formed of smaller diameter than that of through-hole 251 of main chassis 25. Rotary shaft 171 projects further downward in the figure from bearing member 36. The downward projecting portion of rotary shaft 171 is of somewhat smaller diameter so that the projecting portion is provided with a step 172. A small diameter gearwheel 40 and a larger diameter gearwheel 41 are respectively fitted on to the smaller diameter portion of rotary shaft 171. These gearwheels 40, 41 rotate in a unitary manner with rotary shaft 171, but gearwheel 41 is axially slidably arranged on rotary shaft 171. Gearwheel 41 is biased upwards in Figure 9 by means of a coil spring 412 provided between gearwheel 41 and a washer 411 mounted at the bottom end in the figure of rotary shaft 171. However, the upward movement of gearwheel 41 in the figure only occurs when gearwheel 41 abuts gearwheel 40.

A shaft 252 is provided on main chassis 25 approximately midway between reel shaft 17 and flywheel 33. From the top in Figure 9, a larger diameter gearwheel 42 and a smaller diameter gearwheel 43 are respectively freely rotatably supported on shaft 252. A friction member 44 of an approximately ring-shape is provided between gearwheels 42, 43. At the bottom portion in Figure 9 of shaft 252, there is fitted a stop member 45, which is of approximately cylindrical shape. Stop member 45 is provided with a flange portion 451 at its lower end in Figures 9 and 10. Gearwheel 43 is pressed against gearwheel 42 through the intermediary of friction member 44, by means of a coil spring 452 provided on flange portion 451 of stop member 45. Consequently, gearwheels 42, 43 are linked for conjoint movement. Gearwheel 42 is in mesh with gearwheel 35 of flywheel 33, and gearwheel 43 is in mesh with gearwheel 41 of reel shaft 17. Gearwheel 42 is then in a position in which gearwheel 42 would mesh with gearwheel 40 on reel shaft 17, but there is a vertical gap between these gearwheels 42, 40 as seen in Figure 9, so that these gearwheels 42, 40 fail to mesh with each other.

Reel shaft 18 which takes up the tape during rewind operation is supported by main chassis 25, as shown in Figure 10. Specifically, a through-hole 253 whereby reel shaft 18 is mounted is formed in main chassis 25. A bearing member 46 of approximately cylindrical shape is inserted through through-hole 253 and has a flange portion 461 in its lower region in the figure. Flange portion 461 extends to a peripheral region of through-hole 253. Flange portion 461 is fixed to the peripheral region of through-hole 253 by means of screws or the like (not shown). Rotary shaft 181 is freely rotatably inserted into bearing member 46. Rotary shaft 181 projects upwards in the figure beyond bearing member 46. The projecting portion of rotary shaft 181 reaches a reel cap 48 in passing through a through-hole 471 formed in a base portion of a locking member 47, which is formed approximately in the shape of a cylinder having the base portion. Reel cap 48 is made to rotate in unitary manner with rotary shaft 181, but locking member 47 is independent of the rotation of rotary shaft 181. A coil spring 49 is provided between the upper end in the figure of bearing member 46 and the base portion of locking member 47, so that rotary shaft 181 is biased upwards in the figure. Locking member 47 is provided with an abutment portion 473 having a tapered surface 472 which widens from the bottom in the figure to the top. Abutment portion 473 is formed of smaller diameter than that of through-hole 253 of main chassis 25.

A smaller diameter gearwheel 50 is fitted to a portion of rotary shaft 181 which projects further downwards in the figure from bearing member 46. Gearwheel 50 rotates in unitary manner with rotary shaft 181.

A shaft 254 is provided on main chassis 25 approximately midway between reel shaft 18 and shaft 252. A bearing member 51 of approximately cylindrical shape is provided on shaft 254 in such a way that bearing member 51 is freely rotatable and also freely slidable along the direction of shaft 254, i.e., in the vertical direction in Figure 10. A rewind lever 52 and a gearwheel 53 are fitted on to bearing member 51. A coil spring 512 is provided between the lower end in Figure 10 of bearing member 51 and a washer 511, which is fitted on to the lower part in the figure of shaft 254. Bearing member 51 is thus biased upwards in the figure, and in this condition gearwheel 53 meshes with gearwheel 50 of reel shaft 18. Gearwheel 53 is then in a position in which gearwheel 53 would mesh with gearwheel 42, but gearwheels 53, 42 are vertically offset, as seen in Figure 10, so that these gearwheels 53, 42 fail to mesh with each other. Rewind lever 52 is plate-shaped, and at its end positioned between the meshing parts of gearwheels 53, 50 and the lower end in Figure 10 of locking member 47 of reel shaft 18, there is formed a link portion 521 which is inserted through through-hole 253 of main chassis 25. The other end of rewind lever 52 extends to reel shaft 17, where its tip end, in the direction of its extension, is formed with an abutment portion 522. Abutment portion 522 abuts a flat portion of gearwheel 41 of reel shaft 17, from above in Figure 10. Again referring to Figure 6, a rotary shaft 255 is provided in approximately the centre of main chassis 25. A locking lever 54 and a switch lever 55 are freely rotatably supported on rotary shaft 255. As shown in Figures 6, 9, and 10, locking lever 54 is provided with first to third abutment portions 541 to 543, which respectively are capable of abutment with taper portion 215 of first drive portion 212 of playback operating element 21, taper portion 372 of locking member 37 of reel shaft 17 and taper portion 472 of locking member 47 of reel shaft 18. These abutment portions 541 to 543 spread out in three directions about rotary shaft 255. Switch lever 55 is of approximately the same shape as locking lever 54, and is arranged so as to overlap locking lever 54. Switch lever 55 is also provided with first to third abutment portions 551 to 553, which are capable respectively of abutment with taper portions 215, 372, 472 of playback operating element 21  and reel shafts 17, 18. These abutment portions extend in three directions about rotary shaft 255. At a tip end of third abutment portion 553 of switch lever 55, there is formed a fourth abutment portion 554 which abuts a leaf switch 56 for supplying power to motor 27. Thus, when switch lever 55 is rotated in the anti-clockwise direction in Figure 6, leaf switch 56 is subjected to pressure by fourth abutment portion 554, thus becoming ON, so that motor 27 is activated. A projecting abutment portion 555 is formed on one side of third abutment portion 53 of switch lever 55. A coil spring 556 is provided between projecting abutment portion 555 and a prescribed position on main chassis 25, thus biasing switch lever 55 to rotate in the clockwise direction in Figure 6. First to third abutment portions 551 to 553 of switch lever 55 are thereby pressed against taper portions 215, 372 and 472.

A further projecting abutment portion 544 is formed on one side of third abutment portion 543 of locking lever 54. A coil spring 545 is provided between projecting abutment portion 544 and a prescribed position on main chassis 25, thus biasing locking lever 54 for rotation in the clockwise direction in Figure 6. First to third abutment portions 541 to 543 of locking lever 54 are thereby pressed against taper portions 215, 372 and 472. Respective shafts 571, 572 are provided on main chassis 25 in the neighbourhood of reel shafts 17, 18. These shafts 571, 572 are freely fitted into slots 573, 574 formed in opposite  ends of a stop slider 57 which is arranged transversely in Figure 6 between the two reel shafts 17, 18. Stop slider 57 is therefore free to slide in the left and right directions  in Figure 6. A projecting abutment element 575 is formed on one side of stop slider 57. A shaft 576 projects from main chassis 25 at the upper part in Figure 6 of projecting abutment element 575 of stop slider 57. A torsion spring 577 is wound about shaft 576 and fixed at approximately its middle to shaft 576. Both ends of torsion spring 577 are clamped by two side portions of projecting abutment element 575. Thus, whether stop slider 57 is slid to the left or to the right in Figure 6, stop slider 57 returns to its intermediate position. In this intermediate position, a projection 578 formed on one end of stop slider 57 is positioned in the neighbourhood of taper portion 372 of locking member 37 of shaft 17. In addition, a projection 579 formed on the other end of stop slider 57 is positioned in the neighbourhood of taper portion 472 of locking member 47 of reel shaft 18.

Let us now assume that, in the construction as described above, playback operating element 21 is operated to play back the tape. When this happens, head chassis 31 explained above with reference to Figures 6 and 7 is shifted. This causes playback head 29 to come into contact with the tape, and pinch roller 30 to be presed against capstan 26 through the intermediary of the tape. By pressing playback operating element 21 downwards in Figure 7, first abutment portions 541, 551 of locking lever 54 and switch lever 55 are pressed downwards by taper portion 215 of first drive portion 212 of playback operating element 21. Locking lever 54 and switch lever 55 are therefore rotated anti-clockwise in Figure 6 against the biasing force of springs 545, 556. Thus, when playback operating element 21 is operated by being pressed down to the position shown in Figure 8 ,first abutment portion 541 of locking lever 54 is opposite the base surface of first drive portion 212. Locking lever 54 is therefore rotated in the clockwise direction in Figure 6 by the biasing force of spring 545, with the result that first abutment portion 541 of locking lever 54 abuts the base surface of first drive portion 212, thus locking playback operating element 21 in its operated position. Switch lever 55 is then depressed by taper portion 215, and first abutment portion 551 is kept pressed down by first drive portion 212. Fourth abutment portion 554 of switch lever 55 therefore puts leaf switch 56 in an ON condition, causing motor 27 to be driven in the anti-clockwise direction in Figure 6.

Thus, flywheel 33 is rotated in the same direction, and its turning force is transmitted to reel cap 38 through gearwheels 35, 42, friction member 44, gearwheels 43, 40 and rotary shaft 171, causing reel cap 38 to rotate in the anti-clockwise direction in Figure 6, so that the tape is played back.

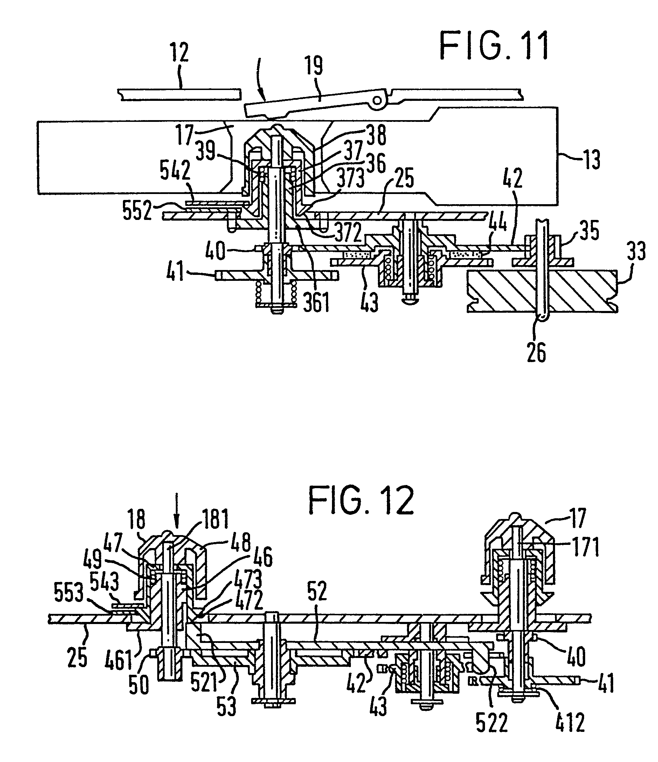

Let us now assume that fast forward operating element 19 is depressed, as shown in Figure 11, to perform fast forward operation of the tape. When this happens, reel cap 38 of reel shaft 17 is depressed downwards in the figure, and locking member 37 is slid downwards in the figure against the biasing force of spring 39. This downwards movement of locking member 37 occurs until its lower end in the figure comes into contact with flange portion 361 of bearing member 36. Thus, in this condition, second abutment portion 552 of switch lever 55 is depressed by taper portion 372 of locking member 37, and switch lever 55 is thereby rotated in the anti-clockwise direction in Figure 6, while second abutment portion 542 of locking lever 54 abuts stop portion 373 of locking member 37. Consequently, leaf switch 56 is put in the ON condition, and reel shaft 17 is locked in its depressed, i.e. operated, position.

-22-

With this depression of reel shaft 17, rotary shaft 171 is also then lowered downwards in the figure, and gearwheels 40, 41, which are mounted on rotary shaft 171, are also shifted in the same direction. The result of this is that gearwheel 41 comes out of mesh with gearwheel 43, and gearwheel 40 comes into mesh with gearwheel 42. Consequently, the turning force of flywheel 33 in the anti-clockwise direction in Figure 6 is transmitted to reel cap 38 through gearwheels 35, 42, and 40 and rotary shaft 171. Reel cap 38 is therefore rotated at high speed in the anti-clockwise direction in Figure 6, so that fast forward operation of the tape occurs.

Let us now assume that rewind operating element 20 is depressed, to rewind the tape. When this happens, as shown in Figure 12, reel cap 48 of reel shaft 18 is depressed downwards in the figure, so that locking member 47 is slid downwards in the figure against the biasing force of spring 49. This downwards shift of locking member 47 occurs until its lower end in the figure abuts flange portion 461 of bearing member 46. Thus, in this condition, third abutment portion 553 of switch lever 55 is depressed by taper portion 472 of locking member 47, so that switch lever 55 is rotated in the anti-clockwise direction in Figure 6, and third abutment portion 543 of locking lever 54 comes into abutment with stop portion 473 of locking member 47.

Consequently, leaf switch 56 is put in the ON condition, and reel shaft 18 is locked in the depressed, i.e. operated, condition. The lower end in the figure of locking member 47 then depresses downwards in the figure link portion 521 of rewind lever 52, so that entire rewind lever 52 is slid downwards in the figure. The result of this is that gearwheels 50 and 53, still in mesh with each other, are slid downwards in the figure, whereupon gearwheel

53 comes into mesh with gearwheel 42. Furthermore, by means of abutment portion 522 of rewind lever 52, gearwheel 41 is slid downwards in the figure against the biasing force of spring 412, so that gearwheel 41 is brought out of mesh with gearwheel 43. The result of this is that the turning force of flywheel 33 in the anti-clockwise direction in Figure 6 is transmitted to reel cap 48 through gearwheels 35, 42, 53 and 50, and rotary shaft 181, thus causing reel cap 48 to rotate at high speed in the clockwise direction in Figure 6, i.e. the tape rewind operation is carried out.

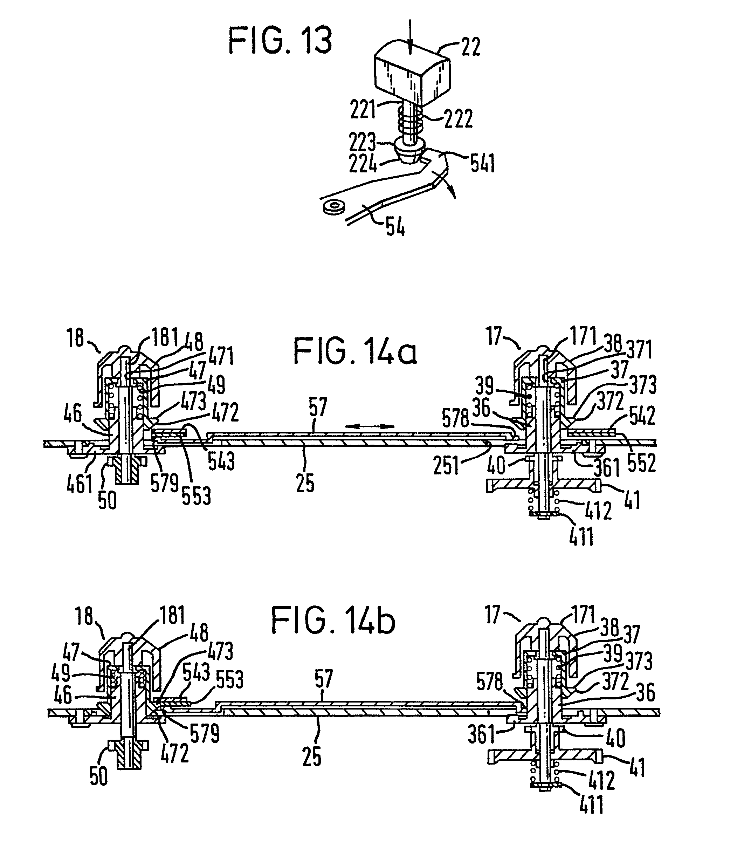

We shall now explain what happens when stop operating element 22 is operated, in the playback, fast forward and rewind conditions. As explained earlier, stop operating element 22 is supported on cassette holder 28, so that stop operating element 22 is freely slidable in the vertical direction in Figure 13. However, stop operating element 22 is supported on cassette holder 28 in such a way that stop operating element 22 is prevented from sliding off upwards in Figure 13.

Operating shaft 221 extends downwards in Figure 13 from the undersurface in the figure of stop operating element 22, and coil spring 222 is mounted on the lower end in the figure of operating shaft 221. This is then mounted on the base surface of drive portion 223 having an approximately conical shape. First abutment portion 541 of locking lever 54 is here pressed against taper portion 224 of drive portion 223, by means of the biasing force of spring 545 (see Figure 6). Thus, stop operating element 22 is biased upwards in Figure 13 by means of spring 222 towards the position in which further upward movement is restricted. Consequently, when stop operating element 22 is operated by being depressed downwards in Figure 13 against the biasing force

of spring 222, first abutment portion 541 of locking lever 54 is shifted in the direction of the arrow in Figure 13 by means of taper portion 224. Locking lever 54 is therefore rotated in the anti-clockwise direction in Figure 6.

Thus, in the playback, fast forward and rewind conditions, one or other of first drive portion 212 and locking members 37, 47, as described above, is locked by first to third abutment portions 541 to 543 of locking lever 54. Consequently, no matter in which of the three operating conditions the tape player is, operation of stop operating element 22 results in the anti-clockwise rotation in Figure 6 of locking lever 54, the result of which is a releasing and the tape player is put into the stop condition.

In this situation, when stop operating element 22 is operated by being depressed downwards in Figure 13, its operational stroke is restricted so that stop operating element 22 is able to only move downwards through a shallow depth, such that first abutment portion 541 of locking lever 54 is not stopped by drive portion 223. Thus, stop operating element 22 is not locked in its operating position.

The tape player explained in this embodiment is provided with an automatic stop mechanism whereby the tape player is automatically brought into a stopped condition when the tape reaches its end during a play back condition. Specifically, referring to Figures 6 and 9, an end portion of friction lever 58 is provided in the lower portion of gearwheel 43 in Figure 9, with a well-known type of friction mechanism arranged between them. When gearwheel 43 is rotated, friction lever 58 is biased towards the direction of rotation. Slot 581 is formed at the other end of friction lever 58, and projecting pin 591 is freely fitted into one end portion of detection lever 59 in slot 581. Detection lever 59 is freely rotatably supported at about its middle by shaft 592 which projects from main chassis 25. One side of the other end of detection lever 59 is brought into contact with the side face of cam portion 421 provided on gearwheel 42. Two pins 593, 594 project from the other end of detection lever 59. Pin 593 is opposite second abutment portion 542 of locking lever 54, while pin 594 is arranged to be capable of abutment with a curved operating wall 422 formed on the flat surface portion of gearwheel 42.

Thus, in the tape playback condition, flywheel 33 and gearwheel 35 rotating in the anti-clockwise direction in Figure 6 cause gearwheels 42, 43 to be rotated in the clockwise direction in Figure 6. Consequently, due to the turning force of gearwheel 43, friction lever 59 is also biased in the clockwise direction about shaft 592. The other end of detection lever 59 is then in sliding contact with cam portion 421, so that detection lever 59 performs an oscillating movement about shaft 592, and a stable playback condition is continued.

When in such a playback condition the tape reaches its end, the rotation of reel shaft 17 is arrested, and the rotation of gearwheels 41, 43 is also thereby arrested. Sliding then occurs between gearwheels 42, 43. Thus, due to the stopping of rotation of gearwheel 43, biasing force is no longer supplied to friction lever 58 and detection lever 59. However, since the rotation of gearwheel 42 continues, cam portion 421 is also rotating, so that detection lever 59 is rotated in the anti-clockwise direction in Figure 6 about shaft 592 to the extent of the maximum diameter of cam portion 421, and stops in this position. When this happens due to the rotation of gearwheel 42, the outside portion of operating wall 422 of gearwheel 42 comes into contact with pin 594 of detection lever 59, with the result that pin 594 and consequently detection lever 59 are rotated in the anti-clockwise direction in Figure 6 from the stopped position along the curved shape of operating wall 422. Pin 593 of detection lever 59 then contacts second abutment portion 542 of locking lever 54, thereby rotating locking lever 54 in the anti-clockwise direction in Figure 6. The locking of playback operating element 21 in its operated position is thereby released, and the automatic stop operation is thereby performed.

The operation of stop slider 57 will now be explained. In Figure 14a, stop slider 57, as explained earlier, is supported on main chassis 25 in such a way that stop slider 57 is freely slidable in the directions of the arrow in the figure. Stop slider 57 is normally held in the intermediate position shown in Figure 14a by means of torsion spring 577 shown in Figure 6. Thus, projections 578, 579 formed at opposite ends of stop slider 57 are positioned at the lower part in Figure 14a of taper portions 372, 472 of locking members 37, 47 of reel shafts 17, 18.

Let us now assume that in this condition as shown in Figure 14a, reel shaft 18 is pressed downwards in the figure and as explained earlier is locked in the depressed position by means of third abutment portion 543 of locking lever 54. When this happens, taper portion 472 of locking member 47 of reel shaft 18 is pressed against projection 579 of stop slider 57, so that stop slider 57 is slid to the right in Figure 14b against the biasing force of torsion spring 577. Projection 572 of stop slider 57 is then positioned approximately contacting bearing member 36 of reel shaft 17, and projection 578 is interposed between flange portion 361 of bearing member 36 and abutment portion 373 of locking member 37.

Consequently, in the rewind condition shown in Figure 14b, even if an attempt is made to operate
fast forward operating element 19, stop portion 373
of locking member 37 of reel shaft 17 is prevented
from being pressed down to its normal depressed
position, i.e. to the position in which stop portion
372 would be locked by second abutment portion 542
of locking lever 54, by abutment with projection
578 of stop slider 57; and vice versa, in the fast
forward condition, in which reel shaft 17 is locked
by locking lever 54 in its normal depressed condition,
projection 572 of stop slider 57 is pressed by taper
portion 372 of locking member 37, so that stop slider
57 is slid leftwards in Figure 14a against the biasing
force of torsion spring 577. Projection 579 of stop
slider 57 is then positioned in between flange portion
461 of bearing member 46 of reel shaft 18 and stop
portion 473 of locking member 47. Consequently,
even if an attempt is made to operate rewind operating
element 20 in the fast forward condition, stop portion
473 of locking member 47 of reel shaft 18 contacts
projection 579 of stop slider 57, preventing operating
element 20 from being pressed into its normal depressed
position.

If an attempt is made to operate fast forward
and rewind operating elements 19, 20 simultaneously,
both reel shafts 17, 18 will be pressed down, but
taper portions 372, 472 of locking members 37, 47
will then grip stop slider 57, so that both reel
shafts 17, 18 are prevented from reaching their normal
depressed positions. That is, reel shafts 17, 18
are able to be locked in their depressed positions
when only one of them is selectively depressed.
Thus, operation of both fast forward and rewind operating
elements 19, 20 at the same time is prevented.

With the tape player mechanism as described
above, an assembly of it is therefore extremely easy,
since first of all, operating shaft 24, which is provided for the purpose of supporting fast forward and rewind operating elements 19, 20 in lid 12, is inserted as shown in Figure 3, through through-hole 128 formed in side portion 125 of lid 12, and then introduced into the interior of lid 12. It is apparent that if support shaft 24 were to be fitted, as shown in Figure 3, in lid 12, but without providing through-hole 128, the construction of bearing portions 191 to 197 and 201 to 207 would become complicated, making the assembly difficult. Another consideration is that lid 12 is intended to be compact, and its interior must therefore be made of almost exactly the same size as tape cassette 13, so that the space for provision of the support mechanism for mounting fast forward and rewind operating elements 19, 20 is very restricted. That is to say, putting the matter the other way around, a support mechanism is required that has a high "space factor" which permits it to be realised in a small space.

Thus, as shown in Figure 3, a high space factor is able to be achieved with a very simple construction and assembly is able to be facilitated by the formation of through-hole 128 in the side portion of lid 12, introducing support shaft 24 into lid 12 through through-hole 128, by simply providing bearing portions 191 to 197 and 201 to 207 with through-holes through which support shaft 24 is able to be inserted. Although, in Figure 3, through-holes 128, 129 are formed in both of side portions 125, 127 of lid 12, a through-holde could of course be formed in one side only.

Furthermore, the depressing of both reel shafts 17,18 at the same time is able to be acted against simply by the provision of stop slider 57 between two reel shafts 17, 18. Thus this task is achieved in a reliable way by a very simple construction. This is conducive to miniaturization of the tape player while yet affording it sufficient protection.

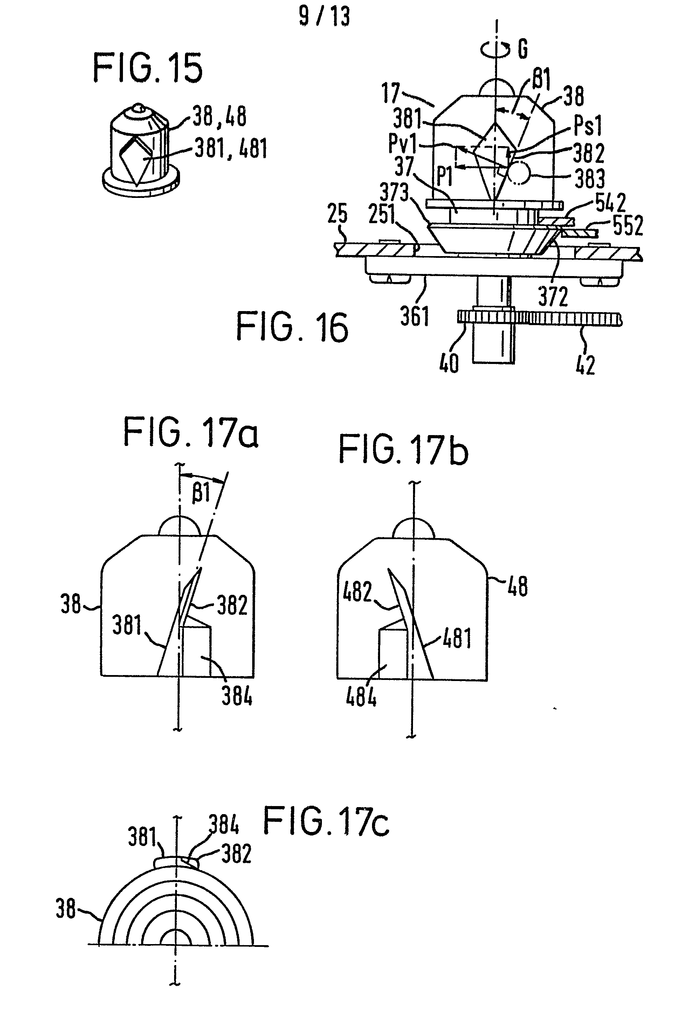

Figure 15 shows the configuration of reel caps 38, 48 of reel shafts 17, 18. Blades 381, 481 of approximately diamond-shape in side view, are formed on the outer surface of approximately cylindrical reel caps 38, 48. Blades 381, 481 are able to abut with projections of reel hubs of tape cassettes for the purpose of transmitting the turning force of reel caps 38, 48 to the reel hubs. The projections (in the case of an ordinary compact tape cassette, six such projections for each reel hub) project in respective peripherally inwards directions from reel hubs. The operation of blade 381 of reel cap 38, for example, will be explained with reference to Figure 16 (the operation of blade 481 the same as that of reel cap 38, so an explanation of blade 481 is omitted). Specifically, in Figure 16, assuming that the arrow G in the figure represents the fast forward operating condition, one of inclined portions 382 on the lower part of blade 381 in the figure of reel cap 38 presses against one of projections 383 (shown by a double-dotted chain line in the figure) formed on a reel hub of the tape cassette, thus rotating the reel hub.

When the tape reaches its end in the fast forward condition, the rotation of the reel hub is stopped, so that inclined portion 382 of blade 381 of reel cap 38 presses against projection 383, causing the rotation of reel cap 38 to be stopped. As explained earlier, when stop operating element 22 is operated, second abutment portion 542 of locking lever 54 separates from stop portion 373 of locking member 37, so that reel cap 38 shifts upwards in Figure 16 due to the biasing force of spring 30 shown in Figure 9, thus returning to its original position.

Inclined portion 382 of reel cap 38 then simultaneously presses against projection 383, causing a lifting force Ps1 to be produced on reel cap 38 itself, the lifting force Ps1 being directed upwards in Figure 16. The lifting force Ps1 is produced by resolving the true force Pv1 which acts on reel cap 38 when inclined portion 382 presses against projection 383 due to the formation of inclined portion 382 on blade 381, into a force P1 acting in the direction of rotation of reel cap 38, and the lifting force Ps1. If the torque of rotation of reel cap 38 is T1 and the radius of blade 381 is r1, we have the relationship;

$$P1 = \frac{T1}{r1}$$

and if the angle of inclined portion 382 with respect to the vertical indicated by the single-dotted chain line in Figure 16 is $\beta 1$, the lifting force Ps1 is given by;

$$Ps1 = P1 \times \tan\beta 1 = \frac{T1}{r1} \times \tan\beta 1$$

Consequently, the biasing force due to spring 39 and the lifting force Ps1 act on reel cap 38, so that it is reliably returned to its original position. Conventional reel cap blades suffered from the problem of erroneous operation since they did not have an inclined part as described above. This meant that when the tape reached its end and the blade pressed too strongly on a reel hub projection, in some cases the reel cap would not be returned to its original position simply by the biasing force of a spring, even though the stop operating element was depressed, so resulting in erroneous operation. However, by forming inclined portion 382 on blade 381 as mentioned above, reel cap 38 is able to be reliably returned to its original position. Moreover, since it is unnecessary for the spring to provide a very strong biasing force, the operating force required to depress fast forward operating element 19 is able to be made small. Further, if blade 381 is made diamond in shape as shown in Figure 16, reel cap 38 is able to be made interchangeable

with the other reel cap 48. That is, it is able to be used as the reel cap of either of reel shafts 17, 18.

Other possibilities for the shape of blades 381, 481 of reel caps 38, 48 are shown in Figures 17a to 17c. Figures 17a, 17c show the shape of reel cap 38 and Figure 17b shows the shape of reel cap 48. In this case also the explanation will be mainly directed to reel cap 38. First of all, in approximately its lower half in each of the figures, blade 381 of reel cap 38 projects with an inclination such that it is approximately tangential to the peripheral side face of reel cap 38. This projecting face comprises a perpendicaular portion 384 formed parallel to the centre line of reel cap 38, and in approximately its upper half in Figure 17a, inclined portion 382 having an angle with respect to the centre line. Reel cap 48 is formed with perpendicular portion 484 and inclined portion 482, similar to perpendicular portion 384 and inclined portion 382 of reel cap 38, but directed oppositely to the corresponding portions on reel cap 38.

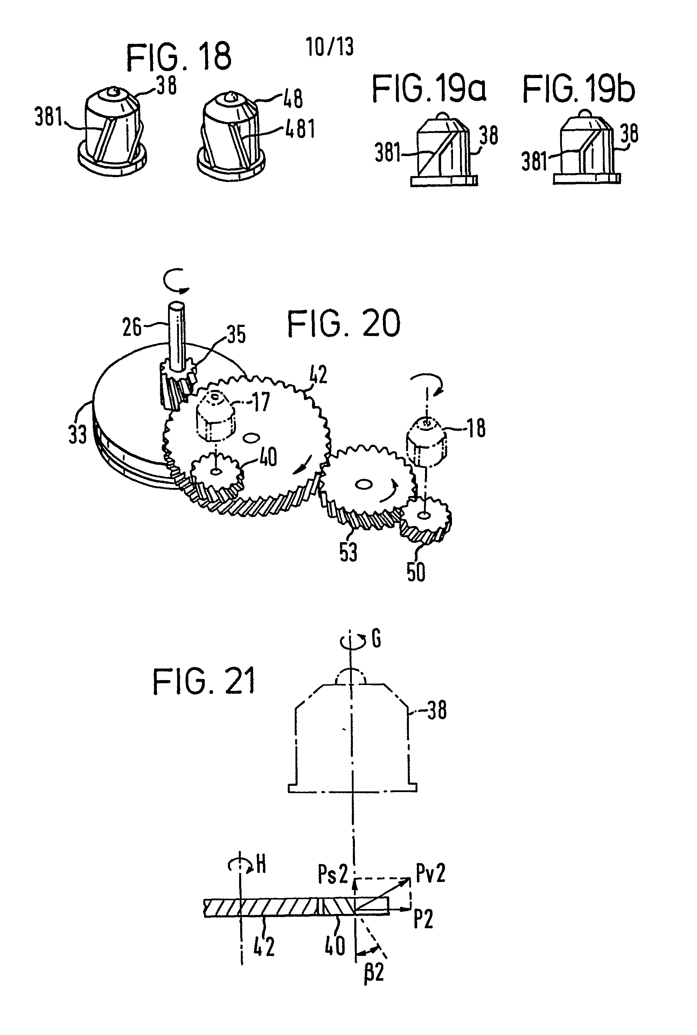

Thus, in the fast forward condition, inclined portion 382 presses against projecting portion 383 of a reel hub (not shown in Figures 17a to 17c), causing the tape to run. When the tape reaches its end, as mentioned earlier, a lifting force is produced by the action of inclined portion 382, causing reel cap 38 to return in the upwards direction in Figure 17a. This results in perpendicular portion 384 of reel cap 38 becoming opposite projection 383 of the reel hub. Consequently, in the stop condition, as shown in Figure 16 above, the reel hub becomes easier to release from reel cap 38 than it is the condition in which projection 383 is opposite inclined portion 382, and the tape cassette is able to therefore easily be removed. Further, if these are moulded of, for example, synthetic resin, removal from the mould of reel caps 38, 48 is also facilitated in the case that they are shaped as shown in Figures 17a to 17c. Apart from that described above, blades 381, 481 of reel caps 38, 48 may of course have the shapes shown in Figure 18 and Figures 19a and 19b. Practically, it is desirable for the angle $\beta 1$ of inclined portions 382, 482 of blades 381, 481 of reel caps 38, 48 to be about 18°. It is an important feature that, as explained above, the inclined portion is formed on the blade of the reel cap to produce a lifting force in a direction such as to cause the reel shaft to return when the tape running is stopped.

Next, as shown in Figure 20, the teeth of gearwheels 35, 40, 42, 50 and 53 are inclined to form what are called helical gears. These are formed with the same object above, namely, that when the tape reaches its end, a lifting force should be obtained that returns reel caps 38, 48 to their original positions. The operation of these will be explained, the description referring mainly to reel cap 38. Let us first of all assume that, in Figure 21, gearwheel 42 receives turning force from flywheel 33 and rotates in the direction of the arrow H in the figure,thereby rotating reel cap 38 in the direction of the arrow G in the figure. Thus, the apparatus is in the fast forward condition. When in the fast forward condition the tape reaches its end, the rotation of a reel hub is stopped, so that the rotation of reel cap 38 and gearwheel 40 is stopped. Thus, when stop operating element 22 is operated, reel cap 38 is returned upwards in Figure 21 by the biasing force of spring 39. Since turning force is then transmitted from flywheel 33 to gearwheel 42, a lifting force Ps2, upwards in Figure 21, is produced by the inclination of the teeth of gearwheels 40, 42. This lifting force Ps2 is produced by resolving the true force Pv2, which acts on gearwheel 40 via the helical teeth of gearwheel 40 when reel cap 38 stops rotating, i.e. gearwheel 40 stops rotating, into a force P2 which acts in the direction of rotation of gearwheel 40 and the lifting force Ps2. That is, if we let the rotational torque of gearwheel 40 be T2, and the radius of gearwheel 40 be r2, we have the relationship;

$$P2 = \frac{T2}{r2}$$

and if we let the helix angle of thread of the helical teeth of gearwheel 40 be $\beta 2$, the lifting force Ps2 is given by;

$$Ps2 = P2 \times \tan \beta 2 = \frac{T2}{r2} \times \tan \beta 2$$

Reel cap 38 is therefore subjected to the biasing force due to spring 39 and to the lifting forces Ps1, Ps2 and is therefore more positively returned. A similar explanation to the above applies to reel cap 48 during the rewind operation.

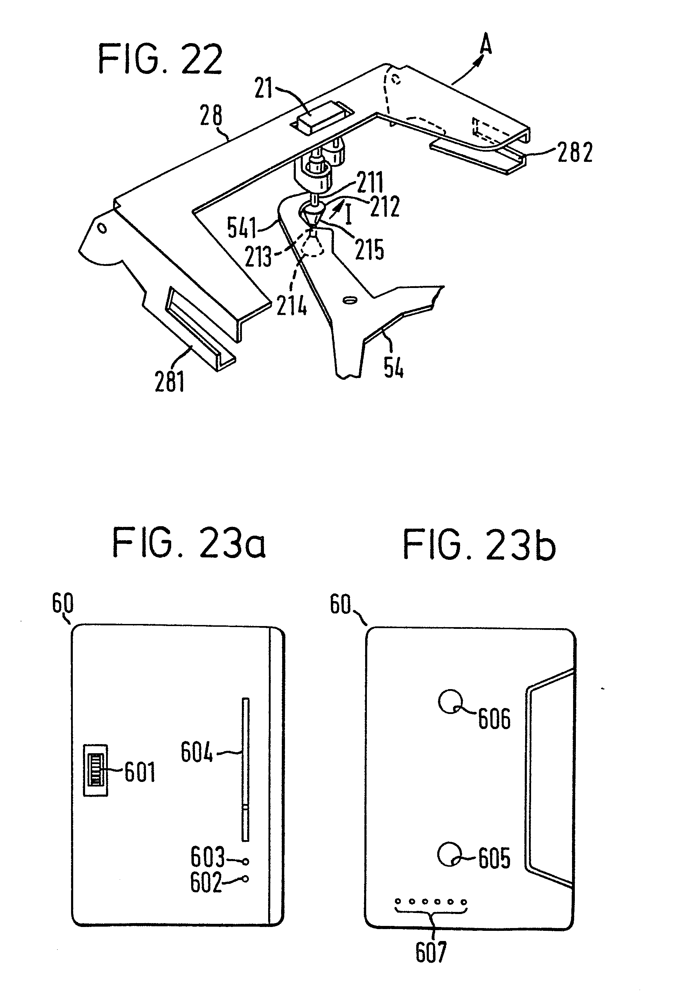

The relationship between first drive portion 212 of playback operating element 21 and first abutment portion 541 of locking lever 54 is shown in Figure 22. In the condition in which playback operating element 21 is locked in the operating position, first abutment portion 541 of locking lever 54 abuts the base surface of first drive portion 212 of playback operating element 21, which is the opposite side, as seen from operating shaft 211, to the side at which cassette holder 28 opens, when it opens in the direction of the arrow A in Figure 22. Thus, when lid 12 is opened in the playback condition, cassette holder 28 rotates in the direction of the arrow A in Figure 22, so that playback operating element 21, which is supported on cassette holder 28, is shifted in the same direction. The result of this is that first drive portion 212, which is integral with playback operating element 21, is shifted in the direction such as to separate from first abutment portion 541 of locking lever 54, i.e. in the direction of    arrow I in the Figure 22, thereby returning playback operating element 21 to the non-operated position.

Damage to the tape when lid 12 is inadvertently opened in the operating condition is able to be prevented, since the tape player is automatically put into the stop condition when this happens. Specifically, a problem may arise if lid 12 is opened in the playback condition because in this condition pinch roller 30 is pressed against capstan 26 with the tape therebetween, and the movement of the tape cassette and pinch roller 30 with cassette holder 28 would result in the tape being damaged by having to slide between pinch roller 30 and capstan 26. However, the problem may be resolved by the tape player being automatically put into the stop condition and pinch roller 30 separated from capstan 26, when lid 12 is opened during the playback condition.

First drive portion 212 of playback operating element 21 is arranged, by means of operating shaft 211, with the prescribed separation from the centre of rotation of cassette holder 28. Consequently, even if lid 12 is opened only slightly, the amount of movement of first drive portion 212 in the direction of the arrow I in Figure 22 is considerable, so that the locking of playback operating element 21 is able to be reliably released and the tape is able to be protected. In this connection, it should be mentioned that some conventional tape players have provision for locking of a playback operating element to be released by linked movement thereof with a lid when the lid opens. However, in such a conventional tape player mechanism, the playback operating element is provided on a cabinet, not on a cassette holder, and release of locking of the playback operating element is therefore carried out through a lock releasing member that is linked to the opening action of the cassette holder. This requires the provision of a member exclusively for lock release, making the construction more complicated and militating against making the tape player more compact. Moreover, it is not released until the lid is almost fully opened. However, the construction of Figure 22 utilizes an arrangement in which playback operating element 21 is provided on cassette holder 28 and playback operating element 21 is moved in a manner which is linked to the action of opening cassette holder 28 to release locking. The construction is therefore simpler and so more compact in that a separate locking release member, such as was required in conventional tape players, is unnecessary. Moreover, locking is released even by a slight opening of lid 12, so that the tape is protected in a reliable manner.

Figures 23a and 23b show tuner pack 60 referred to above. Figure 23a shows one side of tuner pack 60 which faces lid 12, and Figure 23b shows the other side of tuner pack 60 facing main chassis 25. On the face of tuner pack 60 that is opposite lid 12 there are provided a tuning selector 601 which is operable from outside by insertion through slot 121 (see Figure 1) formed in lid 12, and a tuning indicator 602, a frequency band indicator 603, and a frequency dial 604, these being visible from outside through window 23 of lid 12. On the other face of tuner pack 60, there are provided recesses 605, 606 to accommodate reel shafts 17, 18 when tuner pack 60 is fitted in tape cassette holding part 14, and several connection terminals 607 for supplying the received signal, after reception, tuning, detection and amplification etc., by tuner pack 60, to the tape player.

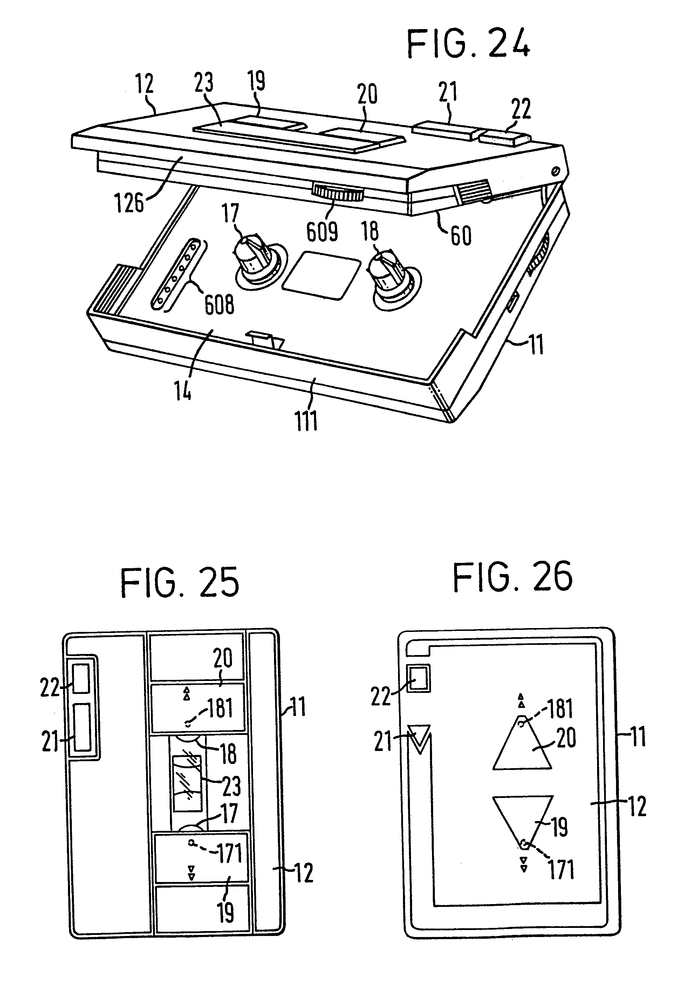

As shown in Figure 24, tuner pack 60 is able to be supported on cassette holder 28 (not visible in Figure 24), like the tape cassette, after opening
lid 12.  By closing lid 12, connection terminals 607
are connected to connection terminals 608 in cabinet
11 so that the received signal is fed to the circuitry
in cabinet 11.  Tuner pack 60 is also provided with
a frequency band changeover switch 609 on its side
(as seen in Figure 24) facing side 126 of lid 12 which
is the outer side when lid 12 is opened. This greatly
facilitates handling in that frequency band changeover
switch 609 is able to be operated easily by opening
lid 12, without the need to remove tuner pack 60 from
cassette holder 28.  Further, a better appearance
of the tape player is obtained.  If required, a notch
may be formed in side 111 of cabinet 11 opposite
frequency band changeover switch 609, so that frequency
band changeover switch 609 is able to be operated
from outside with lid 12 closed.

The operability of conventional tape players
employing tuner packs was, in this respect, poor in
that a frequency band changeover switch was provided
on a flat face of the tuner pack so that the switch
could not be operated without taking the tuner pack
out of a cassette holder.  It is possible to  provide
a  through-hole on a lid for insertion of a frequency
band changeover switch of a tuner pack so that the
switch is able to be operated from outside.  However,
there is a problem when the tape cassette is used
in that the appearance of the tape player is impaired.

The switch which is arranged at the side of
tuner pack 60 needs not necessarily be frequency band
changeover switch 609 but could be any other of the
operating elements (for example, the tuning selector,
etc.) provided for the reception of radio waves.

Figures 25 and 26 show embodiments of the tape
player described above of different external appearance
and shape.  Parts which are the same as those described
above are given the same reference numerals and a detailed explanation thereof is omitted.

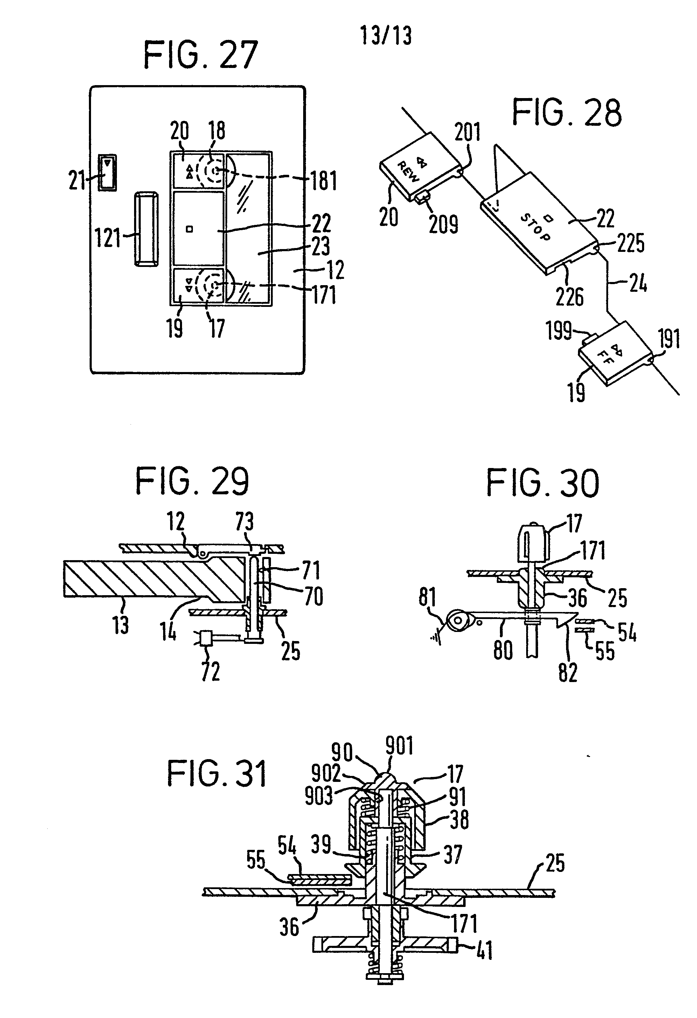

Figures 27 and 28 shown an embodiment of the tape player with a stop operating element or stop mechanism different from the above embodiment. As seen from the front view of the tape player of lid 12 shown in Figure 27, stop operating element 22 is arranged between fast forward operating element 19 and rewind operating element 20, not in the neighbourhood of playback operating element 21. Stop operating element 22 is mounted in an opening of the centre of lid 12, together with fast forward and rewind operating elements 19, 20 on opposite sides of stop operating element 22. These three elements 19, 20 and 22 are substantially rectangular plates, at respective ends of which are formed bearing parts 191, 201 and 225. Support shaft 24 which is shown by a crank line in the drawing but is the same as support shaft 24 of Figure 3 is passed through these bearing parts 191, 201 and 225, and both ends of support shaft 24 are supported by bearing parts 193, 195, 206 and 207 (see Figure 3) of lid 12, thereby making it possible that these operating elements 19, 20 and 22 are mounted.

There are provided projections 199 and 209 at the opposite sides of fast forward and rewind operating elements 19, 20 respectively, these being opposite stop operating element 22 shown in Figure 28. On the other hand, recesses 226, 226 (only one recess 226 being shown in Figure 28) are formed on opposite sides of stop operating element 22 at positions opposite projections 199, 209. Recesses 226, 226 come into engagement with projections 199, 209 from the above in the figure. As a result, when stop operating element 22 is pressed down by the user, it comes to arise that fast forward and rewind operating elements 19, 20 are together pressed down by stop operating element 22. However, the depressed stroke

of fast forward and rewind operating elements 19, 20 in this case is restricted by means of stop slider 57 (see Figure 14a), in such a way as to become shorter than that when fast forward operating element 19 or rewind operating element 20 is operated alone, as described below.

An explanation of the stop operation of the tape player shown in Figures 27 and 28 will be given with respect to any one of the states of playback, fast forward and rewind operations. That is, any one of first driving portion 212 of playback operating element 21 and locking members 37, 47 of reel shafts 17, 18 is locked by that of first to third abutment portions 541, 542 and 543 of locking lever 54 (see Figure 6) which corresponds thereto as mentioned above in the states of playback, fast forward and rewind operations. When stop operating element 22 shown in Figures 27 and 28 is pressed down, fast forward and rewind operating elements 19, 20 are pressed down together by stop operating element 22 at the restricted stroke as mentioned above. Then, both reel shafts 17, 18 are slid, for example downwards in Figure 14a. As a result either one or both of tapered surfaces 372, 472 of locking members 37, 47 of reel shafts 17, 18 pushes second and third abutment portions 542, 543 of locking lever 54 despite the fact that the tape player is in any one of the three operating conditions, so that locking lever 54 is rotated in the anti-clockwise direction in Figure 6. Therefore, the locking of any one of the three operating conditions is released, thereby resulting in the stop condition.

Since projection 579 of stop slider 57 is pushed by tapered surface 472 of locking member 47 of reel shaft 18 when both reel shafts 17, 18 are pressed down by stop operating element 22, stop slider 57 is slid rightwards in Figure 6. Reel shaft 17 is also pressed down together at this time and projection 578 of stop slider 57 comes into contact with tapered surface 372 of locking member 37 of reel shaft 17. In other words, it comes to pass that stop slider 57 is clasped between tapered surfaces 372, 472 of both locking members 37, 47. As a consequence, both reel shafts 17, 18 are regulated in such a way that they are not operated to a deep position in comparison with the case when they are operated alone. The position where both reel shafts 17, 18 are regulated means a shallow position where both locking members 37, 47 are not locked together with second and third abutment portions 542, 543 of locking lever 54. Thus, both reel shafts 17, 18 are not locked at the operative position even if stop operating element 22 is operated. In other words, it is able to be said that the operative stroke of stop operating element 22 is short in comparison with the case where fast forward and rewind operating elements 19, 20 are operated alone.

Figure 29 shows a case wherein a pause operating member 70 is mounted using one opening of through-hole 71 which is one of a pair of through-holes of a tape cassette designed for capstans of tape players capable of passing therethrough. In other words, in case tape cassette 13 is mounted to tape cassette holding portion 14 (see Figure 1b), capstan 26 is passed through the other of the pair of through-holes for capstans (which is not shown in the figure but is the same as through hole 71 of Figure 29), and pause operating member 70 is passed through hole 71 which is one of the holes for capstans. Pause operating member 70 is supported in such a way as to be slidable along through-hole 71, and is connected to a well known push-pull mechanism at the lower portion in the figure of main chassis 25 and, at the same time, is in engagement with a leaf switch 72. In addition, there is provided a pause operating element 73 in lid 12 in the same way as the other operating elements 19, 20, and the like. If pause operating element 73 is once operated in such a manner as to be pressed, pause operating member 70 is pressed downwards in the figure and locked in position. At this time, leaf switch 72 is turned off, so that the supply of the electrical power to motor 27 is stopped, and the tape feed is stopped, and if pause operating element 73 is then pressed in this condition, the locking of pause operating member 70 is released, so that leaf switch 72 is turned to the original ON condition. Thus, the tape feed is started again.

Therefore, first of all, since there are provided various kinds of operating elements in lid 12 itself, it becomes possible to enlarge the size of operating elements and arrange these operating elements in a fairly large space. Thus, the operative efficiency is able to be enhanced very much without preventing tape players from being made too small. In this case, it is also acceptable if the above mentioned various operating elements are moulded integrally with lid 12. Then, it will become advantageous, for example, if a portion of lid 12 which becomes an operating element is made thin so as to be elastic, thereby making it possible to effect a pressing operation. Furthermore, since the operating elements are passed through various kinds of openings or through-holes (the through-holes through which capstan 26 is passed, the through-holes through which guide pins are passed and the through-holes through which reel shafts 17, 18 are passed) which are formed in the direction of the thickness of tape cassette 13, so as to make it possible to operate from the side of the planar portion of tape cassette 13, it is not necessary to especially provide the spaces for putting the operating elements within cabinet 11, which is advantageous in view of the use of the space and which will fully contribute to, in particular, making small the size of the tape player.

In addition, since reel shafts 17, 18 which are to be passed through the through-holes formed in the direction of the thickness of tape cassette 13 are in particular utilized as operating members for operation in the axial direction, the constitution is not useless but organic, thereby making it possible to ensure a reliable operation. Furthermore, since reel shafts 17, 18 which are to the take-up side at the time of fast forward and rewind are provided for the fast forward and rewind operations, it becomes possible to avoid any erroneous operation and enchance much more the operative efficiency. Furthermore, since reel caps 38, 48 for the rotation and locking members 37, 47 for locking and turning on and off leaf switch 56 are provided coaxially and separately from reels shafts 17, 18, unnecessary side pressure such as the energising force of the spring from the mechanism side of the tape player is not applied to reel caps 38, 48, so that the stable feeding of the tape is not prohibited.

By the way, it is also possible to provide means as shown in Figure 30 for locking reel shafts 17, 18 at the operated position, and at the same time, turning on leaf switch 56. In connection with this, an explanation will be given with respect to reel shaft 17. Reel shaft 17 is rotatably supported in such a manner as to be slidable along the through-hole of tape cassette 13 by bearing member 36 mounted on main chassis 25. One end of a locking member 80 is in engagement with the lower portion in the figure of rotary shaft 171. The other end of locking member 80 is rotatably supported and energized in the direction which is anti-clockwise in the figure by a torsion spring 81. In addition, there is formed a tapered surface 82 as shown in the figure at one end of locking member 80. If reel shaft 17 is operated to be pressed downwards in the figure, locking member 80 is rotated in the clockwise direction in conjunction with the movement of reel shaft 17. At this time locking lever 54 and switch lever 55 (see Figure 6) are pushed by tapered surface 82 so that they are rotated. In addition, locking lever 54 is in engagement with the upper end of locking member 80 when locked, so that reel shaft 17 is locked at the operated position.

Figure 31 shows a further modification of reel shaft 17 portion where reel cap 38 is different from that of the above-mentioned embodiments, by reel cap 38 being mounted slidably along the axis of reel shaft 17. The rest of reel shaft 17 portion is equivalent with the above embodiments, so that an explanation of Figure 31 will be restricted to reel cap 38 and parts referring directly to reel cap 38.

As shown in Figure 31, there is provided a reel cap guide 90 in a fixed manner on the upper end of rotary shaft 171 of reel shaft 17. Reel cap guide 90 has a round top portion 901, a flange portion 902 and a cylindrical portion 903 whereby reel cap guide 90 is fitted to rotary shaft 171. The lower end of cylindrical portion 903 of reel cap guide 90 is in contact with the base portion of locking member 37. Therefore, when round top portion 901 of reel cap guide 90 is depressed downwards in the figure by fast forward operating element 19, locking member 37 is depressed downwards in the figure together with reel cap guide 90 and rotary shaft 171. To cylindrical portion 903 of reel cap guide 90, reel cap 38 is mounted slidably along the axis of cylindrical portion 903, that is, the axis of reel shaft 17. Reel cap 38 is biased upwards in the figure by a coil spring 91 mounted between the base portion of locking member 37 and the base portion of reel cap 38, but reel cap 38 is prevented from coming out of reel shaft 17 by flange portion 902 of reel cap guide 90. Reel cap 38 is slidably mounted to reel shaft 17 as mentioned above, but restricted in its rotational movement by means of reel cap guide 90. Therefore, reel cap 38 is rotated in accordance with the rotation of reel shaft 17.

The operation of Figure 31 is as below. When the projections 383 of the reel hub of the tape cassette 13 (not shown) accidentally meet the blades of reel cap 38 in the course of loading tape cassette 13 into tape cassette loading part 14 of the tape player, only reel cap 38 is able to slide downwards in the figure. Therefore, rotary shaft 171 and locking member 37 are avoided from erroneous depression caused by an engagement with the projections of the reel hub of tape cassette 13. Reel cap 38 is able to return to its upward position in the figure by the biasing force of coil spring 91 at the time when reel shaft 17 is energized to rotate, since the blades of reel cap 38 get of of mesh with the projections of the reel hub of tape cassette 13. Then, reel cap 38 is able to rotate the reel hub of tape cassette 13. As a result, the erroneous fast forward operation of the tape is prevented. Furthermore, it will be easily understood that reel shaft 18 is also able to be constructed in the same manner as mentioned above.

CLAIMS:-

1. Apparatus for controlling movement of tape disposed on at least one reel, the reel defining a hole therethrough, the apparatus comprising: a moving member adapated for co-operation with the said hole for rotating the said reel, the member being rotatable about an axis and slidable along this axis; means for rotating the said moving member; and means for ccupling the said rotating means and the said moving member when the moving member is slid in one direction.

2. Apparatus according to Claim 1, wherein the said coupling means couples the said rotating means and the said moving member when the said moving member is manually actuated.

3. Apparatus according to Claim 2, further comprising means for releasing the said coupling means from its operation.

4. Apparatus according to Claim 3, further comprising: means for biasing the said moving member in another direction, opposite the said one direction, such that the said moving member and the said rotating means are uncoupled from each other; and means for locking the said moving member in a position opposite the said biasing means, such that the said moving member and the said rotating means are coupled through the said coupling means, wherein said releasing means includes means for unlocking the said locking means to release the said moving member from the said position.

5. Apparatus according to any preceding Claim, wherein it further comprises means adapted for receiving the said reel, and the said one direction corresponds to the direction towards the said receiving means from the reel received on the said receiving means.

6. Apparatus for controlling movement of a tape disposed on at least one reel, the reel defining a hole therethrough, the apparatus comprising: a moving member adapted for co-operation with the said hole for rotating the said reel, the member being both rotatable about an axis and slidable along this axis; means for rapidly rotating the said moving member; means for slowly rotating the said moving member; first means for coupling the said moving member and the said rapid rotating means when the said moving member is slid in a first direction; and second means for coupling the said moving member and the said slow rotating means when the said moving member is slid in a second direction.

7. Apparatus according to Claim 6, further comprising: means for biasing the said moving member in one of the said first and second directions; means for locking the said moving member in a position opposite the said biasing means after the said moving member has been slid in the other of the said first and second directions; and means for releasing the said moving member from the said locking member.

8. Apparatus according to Claim 7, wherein the said biasing means biases the said moving member in the said second direction.

9. Apparatus according to Claim 7 or 8, wherein it further comprises means for receiving the said reel and the said first direction corresponds to the direction towards the said receiving means from the reel received on the said receiving means and the said second direction corresponds to the direction towards the said reel received on the said receiving means from the receiving means.

10. Apparatus for controlling movement of tape disposed on a pair of reels, each of the reels defining a hole therethrough, the apparatus comprising: a pair of moving members, adapted for co-operation with respective ones of said holes, for rotating the said reels, the said members being rotatable about first and second axes respectively, and slidable along the said first and second axes respectively; a pair of means for rotating the said pair of moving members respectively, in opposite directions; and a pair of coupling means, one of the coupling means being for coupling one of the said pair of moving members and a corresponding one of the said pair of rotating means when one of the said moving members is slid in one direction, and the other of the said coupling means being for coupling the other of the said pair of moving members and the other of the said pair of rotating means when another of the said moving members is slid in one direction.

11. Apparatus according to Claim 10, wherein each of the said coupling means couples corresponding ones of the said pair of rotating means and the said pair of moving members when the corresponding one of the said moving members is manually actuated.

12. Apparatus according to Claim 11, further comprising means for releasing each of the said coupling means from its operation.

13. Apparatus according to Claim 12, further comprising: a pair of biasing means, each for biasing a respective one of the said pair of moving members in another direction opposite the said one direction such that the biased moving member and a corresponding one of the said pair of rotating means are uncoupled from each other; and a pair of locking means, each for locking a corresponding one of the said pair of moving members in a position opposite a corresponding one of the said biasing means such that the locked moving member and a corresponding one of the said pair of rotating means are coupled through a corresponding one of the said pair of coupling means, wherein the said releasing means includes means for unlocking the said pair of locking means to release the said pair of moving members from the said positions.

14. Apparatus according to Claim 11, further comprising: a pair of biasing means, each for biasing a respective one of the said pair of moving members in another direction opposite the said one direction such that the biased moving member and a corresponding one of the said rotating means are uncoupled from each other; a pair of locking means, each for locking a corresponding one of the said pair of moving members in a position opposite a corresponding one of the said pair of biasing means such that the locked moving member and a corresponding one of the said pair of rotating means are coupled with each other through a corresponding one of the said pair of coupling means; and means for releasing a locked one of the said pair of moving members when the unlocked one of the said pair of moving members is slid in the said one direction.

15. Apparatus for controlling movement of tape disposed on a pair of reels, each of the reels defining a hole therethrough, the apparatus comprising: a pair of moving members, adapted for co-operation with respective ones of the said holes, for rotating the said reels, the said members being rotatable about first and second axes respectively, and slidable along the said first and second axes respectively; a pair of means for rapidly rotating the said pair of moving members respectively, in opposite directions; a pair of coupling means, one of the said coupling means being for coupling one of the said pair of moving members and a corresponding one of the said pair of rapid rotating means when one of the said moving members is slid in one direction, and the other of the said coupling means being for coupling the other of the said pair of moving members and the other of the said pair of rapid rotating means when another of the said moving members is slid in one direction; means for slowly rotating one of the said pair of moving members in the same direction as the rapid rotating means causes the said one of the said pair of moving members to rotate; and means for coupling the said one of the said pair of moving members and said slow rotating means when the said one of the said pair of moving members is slid in another direction opposite the said one direction.

16. Apparatus according to Claim 15, further comprising: a pair of biasing means, each for biasing a respective one of the said pair of moving members in said other direction such that the said pair of moving members and the said pair of rapid rotating means are uncoupled from each other, and the said one of said pair of moving members and the said slow rotating means are coupled together; a pair of locking means, each for locking a corresponding one of the said pair of moving members in a position  opposite a corresponding one of the said pair of biasing means such that the       locked moving member and a corresponding one of the said pair of rapid rotating means are coupled with each other through a corresponding one of the said pair of coupling means; and means for releasing a locked one of the said pair of moving members when the unlocked one of the said pair  of moving members is slid in the said one direction.

17. Apparatus for driving a cartridge tape, the cartridge tape including a housing defining a hole therethrough, at least one reel  and tape wound on the reel, the apparatus comprising:  means adapted for receiving the said cartridge tape; a moving member adapted for rotating the said reel, the moving member being mounted on the said receiving means; means for driving the said moving member; and means for controlling the operation of the said driving means, the controlling means including an actuating member extending through the said hole when said cartridge tape is located on the said receiving means.

18. Apparatus according to Claim 17, wherein the said actuating member is slidable along the said hole when the cartrdige tape is located on the said receiving means.

19. Apparatus according to Claim 17 or 18, wherein the said actuating member is mounted concentrically with the said moving member.

20. Apparatus for driving a cartridge tape, the cartridge tape including a housing defining a hole therethrough, at least one reel and tape wound on said reel, the apparatus comprising: means adapted for receiving the said cartridge tape; a moving member adapted for rotating the said reel, the moving member being mounted on the said receiving means; means for driving the said moving member; and means for interrupting the operation of the said driving means, the interrupting means including an actuating member extending through the said hole when the said cartridge tape is located on the said receiving means.

21. Apparatus according to Claim 20, wherein the said actuating member is slidable along the said hole when the said cartridge tape is located on the said receiving means.

22. Apparatus according to Claim 20 or 21, wherein the said actuating member is mounted concentrically with the said moving member.

23. Apparatus according to Claim3, 4 or 7 which further comprises a chassis, the said moving member being mounted on the chassis, and means, pivotably attached to the said chassis, for receiving the said reel, the said releasing means further comprising means for releasing the said moving member when the said receiving member is pivoted away from the said chassis.

24. Apparatus according to Claim 12, 13, 14 or 16 which further comprises a chassis, the said moving member being mounted on the said chassis, and means, pivotably attached to said chassis for receiving said pair of reels, the said releasing means further comprising means for releasing said members when said receiving means is pivoted away from the said chassis.

25. Apparatus according to Claim 10 or 15 which further comprises a chassis, the said pair of moving members being mounted on the said chassis, means, pivotably attached to the said chassis, for receiving said pair of reels, and means for stopping the rotation of the said pair of moving members when the said receiving means is pivoted away from the said chassis.

FIG.1a

FIG.1b

FIG. 2

FIG. 3

FIG.4

FIG.5

FIG.6

# FIG. 7

# FIG. 8

FIG. 9

FIG. 10

FIG. 11

FIG. 12

## FIG. 13

## FIG. 14a

## FIG. 14b

**FIG.15**

38,48
381,481

**FIG. 16**

G
17
381
Pv1
37
373
25
251
361
ß1
38
Ps1
382
383
542
552
372
40
42

**FIG. 17a**

ß1
38
381
382
384

**FIG.17b**

482
481
48
484

**FIG.17c**

381
384
382
38

FIG. 18

381

38

48

481

FIG.19a

381

38

FIG.19b

381

38

FIG. 20

26

35

17

42

33

40

18

53

50

FIG. 21

G

38

H

Ps2

Pv2

P2

42

40

β2

FIG. 22

21

28

A

282

211
212
I
215
541
213
214
281

54

FIG. 23a

60

601
604
603
602

FIG. 23b

60

606

605

607

FIG. 24

FIG. 25

FIG. 26

## FIG. 27

## FIG. 28

## FIG. 29

## FIG. 30

## FIG. 31